Europäisches Patentamt

European Patent Office

Office européen des brevets

(19)

(11) Numéro de publication : **0 403 997 B1**

(12) **FASCICULE DE BREVET EUROPEEN**

(45) Date de publication du fascicule du brevet :
30.11.94 Bulletin 94/48

(51) Int. Cl.⁵ : **H04L 12/56**

(21) Numéro de dépôt : 90111420.7

(22) Date de dépôt : 18.06.90

(54) **Procédé et dispositif d'évaluation quantifiée du débit de circuits virtuels empruntant une voie de transmission à multiplexage temporel asynchrone.**

(30) Priorité : 20.06.89 FR 8908193

(43) Date de publication de la demande :
27.12.90 Bulletin 90/52

(45) Mention de la délivrance du brevet :
30.11.94 Bulletin 94/48

(84) Etats contractants désignés :
AT BE CH DE DK ES FR GB IT LI NL SE

(56) Documents cités :
EP-A- 0 241 113
EP-A- 0 275 679
EP-A- 0 293 314

(73) Titulaire : ALCATEL CIT
12 Rue de la Baume
F-75008 Paris (FR)

(72) Inventeur : Thiebaut, Georges
Coat Gourhant Louannec
F-22700 Perros Guirec (FR)
Inventeur : Le Bihan, Denis
Convenant Huon
F-22300 Lammerin (FR)

(74) Mandataire : Weinmiller, Jürgen et al
Lennéstrasse 9
Postfach 24
D-82336 Feldafing (DE)

EP 0 403 997 B1

## Description

La présente invention concerne un procédé et un dispositif d'évaluation du débit de circuits virtuels empruntant une voie de transmission à multiplexage temporel asynchrone.

Une voie de transmission à multiplexage temporel asynchrone est une voie de transmission acheminant des messages de données dans des structures de données numériques appelées cellules. Chaque cellule comprend un en-tête constitué, par exemple, de quatre caractères à huit bits et un corps de message constitué d'un nombre défini de caractères, 32 par exemple. Sur la voie de transmission, de telles cellules se suivent sans interruption. S'il n'y a pas de message à transmettre, la voie de transmission achemine une cellule "vide", c'est-à-dire une cellule de même format qu'une cellule de message et comportant une information conventionnelle aisément reconnaissable. Des dispositions sont prises pour maintenir une proportion suffisante de telles cellules vides dans le flot des cellules de message ; elles servent en effet, notamment, à la synchronisation de l'extrémité de réception sur le format des cellules.

L'en-tête de chaque cellule de message contient sur deux caractères par exemple, une information définissant, à l'intention de l'extrémité de réception, la direction dans laquelle le corps de message devra être retransmis. Les deux autres caractères de l'entête contiennent des informations des service et, notamment, une information de contrôle de code et de détection d'erreur relative aux deux caractères de destination précédents. La même information se retrouve dans les en-têtes de cellules irrégulièrement espacées, qui ont la même destination. Elle identifie ainsi une sorte de circuit virtuel occupant une partie de la capacité de transmission de la voie de transmission. Plus généralement, ce circuit virtuel va occuper la voie de transmission en lui apportant un certain débit, mesuré par exemple en cellules par unité de temps, et ce débit est fluctuant. L'invention a précisément pour objet l'évaluation de ce débit.

La voie de transmission supporte à tout instant plusieurs circuits virtuels dont les cellules s'intercalent de manière irrégulière dans ce qui est couramment appelé un multiplexage temporel asynchrone. Les débits - fluctuants - des différents circuits virtuels sont différents. La somme de ces débits est limitée par le débit maximal de la voie de transmission. Elle fluctue aussi. Cela laisse la place à la transmission de cellules vides.

Par ailleurs, le nombre de circuits virtuels qui peuvent être séparément identifiés dépend du nombre de bits dévolus à cette information dans l'en-tête des cellules. Le nombre maximal de circuits virtuels est quant à lui déterminé, entre autres, par le nombre de circuits virtuels auquel on aboutit en divisant le débit maximal de la voie de transmission par le débit minimal d'une source de données pouvant emprunter un circuit virtuel. Il est très élevé et atteint par exemple 64 K.

Mais on destine la transmission à multiplexage temporel asynchrone aux plus larges domaines d'application et les débits à prévoir pour les sources pouvant emprunter un circuit virtuel s'étagent dans une vaste gamme de débits (par exemple de quelques kilobits à quelques centaines de mégabits par seconde). Le nombre de circuits virtuels actifs sera donc en général bien moindre que leur nombre maximal.

Une voie de transmission à multiplexage temporel asynchrone est donc faite pour acheminer les données fournies par des sources aux débits très variés et fluctuant. En aval, des équipments de commutation et de transmission acheminent les messages contenus dans les cellules vers leurs destinations. Il convient donc de vérifier, au niveau de la voie de transmission considérée, pour ne pas risquer d'engorgement en aval, qu'aucune source, par fraude ou par suite d'une défaillance, n'apporte un débit supérieur à celui qui lui est globalement attribué. Si cela se produit, l'action corrective couramment admise est d'empêcher l'acheminement par la voie de transmission de toute cellule considérée comme excédentaire par rapport au débit globalement attribué au circuit virtuel, ou tout au moins de marquer la cellule excédentaire en tant que telle, pour qu'elle soit rejetée plus loin, en cas d'engorgement. La présente invention concerne un système d'évaluation du débit de circuits virtuels permettant d'accomplir une telle vérification et de signaler ainsi les cellules excédentaires.

Une telle évaluation revient à mesurer le débit de chaque circuit virtuel, à évaluer le débit mesuré par rapport à des limites déterminées et, lorsque certaines limites sont franchies, à déterminer la nécessité d'une action corrective qui pourra prendre l'une des formes indiquées plus haut.

La mesure de débit a déjà été considérée dans des systèmes de transmission et de commutation de paquets. Le document de brevet EP-A-O 275 679 divulgue ainsi un système dans lequel les caractères des paquets sont comptés à l'aide d'un compteur durant un intervalle de temps ; à l'arrivée de chaque paquet, durant l'intervalle de temps, une décision est prise quant à une éventuelle action corrective, en comparant la position atteinte par le compteur à un ou plusieurs seuils. Un tel système est essentiellement dédié à un circuit virtuel, même si le processeur qui le met en oeuvre peut opérer au bénéfice de plusieurs circuits virtuels, par partage de temps. Le temps consommé à l'occasion de chaque paquet est considérable, mais les paquets sont relativement longs et peu fréquents, de sorte que le facteur temps ne constitue pas un obstacle.

Un tel système n'est toutefois pas applicable dans le cas de la transmission de cellules par multiplexage temporel asynchrone dans lequel les cellules sont courtes et fréquentes.

La mesure de débit peut toutefois s'effectuer en prévoyant une mémoire par circuit virtuel, et une horloge fournissant une heure courante. A la réception d'une cellule du circuit virtuel, l'heure courante est enregistrée dans la mémoire. A la réception d'une cellule suivante du même circuit virtuel, la mémoire est lue. On dispose alors, à la fois de l'heure à laquelle a été reçue une cellule antérieure et de l'heure courante qui est l'heure de réception d'une cellule présente. Connaissant les rangs relatifs de ces deux cellules, il est alors toujours possible d'établir une mesure de débit qui s'attache à la cellule présente. Par exemple, si les deux cellules considérées sont consécutives, la différence entre l'heure courante et l'heure enregistrée peut constituer une mesure de débit instantané du circuit virtuel. D'autres méthodes peuvent être envisagées pour obtenir une telle mesure de débit.

Les demandes de brevets européens n° 90 111418.1 (EP-A-403 995) et 90111419.9 (EP-A-403 996) déposées le même jour que la présente demande par le même demandeur couvrent chacune une méthode de ce type.

Ensuite, il faut passer d'une mesure de débit à un débit mesuré.

Le débit d'un circuit virtuel, dans les applications considérées à l'heure actuelle, n'est pas destiné à être constant. Un circuit virtuel se verra ainsi autorisé, et véhiculera, un débit moyen sur longue période, un débit plus élevé sur une courte période, un débit encore plus élevé sur une durée encore plus courte, etc. Une mesure de débit attachée à une cellule doit ainsi être vue comme une valeur ponctuelle qui demande une interprétation, compte tenu d'autres mesures de débit antérieures, pour conduire à un débit mesuré, lequel pourra être comparé à un seuil au moins, afin de déceler le franchissement de ce seuil et de déterminer ainsi la nécessité d'une action corrective.

La présente invention a pour objet un procédé et un dispositif d'évaluation du débit de circuits virtuels empruntant une voie de transmission à multiplexage temporel asynchrone répondant à ce besoin.

Le procédé d'évaluation du débit de circuits virtuels acheminant des cellules et empruntant une voie de transmission à multiplexage temporel asynchrone de l'invention comprend l'emploi d'une mémoire dans laquelle à chaque circuit virtuel est affecté un emplacement contenant un ensemble de données - que l'on appellera contexte - définissant les conditions de l'évaluation du débit de ce circuit virtuel et prévoit, à la réception de chaque cellule, la lecture du contexte du circuit virtuel auquel appartient cette cellule, en vue de l'évaluation du débit de ce circuit virtuel, et il comprend en outre l'emploi d'une horloge aménagée pour fournir une heure courante associée à ce circuit virtuel, ainsi que de moyens de mesure de débit intervenant à l'arrivée de chaque cellule aux fins de la mesure de débit du circuit virtuel auquel appartient cette cellule, ces moyens de mesure fournissant, à l'arrivée d'une cellule, à partir de ladite heure courante et d'au moins une heure de début enregistrée dans ledit contexte à l'arrivée d'une cellule précédente, au moins une mesure de débit du circuit virtuel de cette dernière cellule ; il se caractérise en ce que le contexte comprend au moins un seuil de débit et qu'il est prévu de comparer une telle mesure de débit avec ce seuil et d'actionner un compteur de dépassements, dans un premier sens, si ce seuil est atteint ou dépassé, ou dans un autre sens, si ce seuil n'est pas atteint, ainsi que de déterminer qu'un tel actionnement a amené le compteur de dépassements dans une position extrême dudit premier sens, et alors de fournir un signal manifestant la nécessité d'une action corrective.

Selon une autre caractéristique de l'invention, il est prévu plusieurs seuils de débit et une valeur de compte et il est prévu de comparer une desdites mesures de débit avec ces seuils, pour déterminer dans quel intervalle entre seuils elle se trouve, et de modifier ladite valeur de compte en fonction dudit intervalle déterminé, ainsi que de déterminer l'arrivée en position extrême d'un premier sens de cette valeur de compte pour fournir alors ledit signal manifestant la nécessité d'une action corrective.

Le dispositif d'évaluation du débit de circuits virtuels acheminant des cellules et empruntant une voie de transmission à multiplexage temporel asynchrone de l'invention comprend une mémoire dans laquelle à chaque circuit virtuel est affecté un emplacement contenant un ensemble de données - que l'on appellera contexte - définissant les conditions de l'évaluation du débit de ce circuit virtuel, des moyens permettant, à la réception de chaque cellule, la lecture du contexte du circuit virtuel auquel appartient cette cellule, en vue de l'évaluation du débit de ce circuit virtuel, une horloge aménagée pour fournir une heure courante associée à ce circuit virtuel, ainsi que des moyens de mesure de débit intervenant à l'arrivée de chaque cellule dans la mesure du débit du circuit virtuel auquel appartient cette cellule, ces moyens de mesure fournissant, à l'arrivée d'une cellule, à partir de ladite heure courante et d'au moins une heure de début enregistrée dans ledit contexte à l'arrivée d'une cellule précédente, au moins une mesure de débit du circuit virtuel de cette dernière cellule ; il se caractérise en ce que le contexte comprend au moins un seuil de débit et en ce que des moyens sont prévus pour comparer une telle mesure de débit avec ce seuil et des moyens pour actionner un compteur de dépassements dans un premier sens, si ce seuil est atteint ou dépassé, ou dans l'autre sens, si ce seuil n'est pas atteint, des moyens étant en outre prévus afin de déterminer qu'un tel actionnement a amené le compteur de dépassements dans une position extrême dudit premier sens, et alors de fournir un signal manifestant la nécessité d'une action corrective.

Selon une autre caractéristique de l'invention, il est prévu plusieurs seuils de débit et une valeur de compte et il est prévu de comparer une desdites mesures de débit avec ces seuils, pour déterminer dans quel intervalle entre seuils elle se trouve, et de modifier ladite valeur de compte en fonction dudit intervalle déterminé, ainsi que de déterminer l'arrivée en position extrême d'un premier sens de cette valeur de compte pour fournir alors ledit signal manifestant la nécessité d'une action corrective.

Les différents objets et caractéristiques de l'invention seront détaillés dans la description qui va suivre, faite à titre d'exemple non limitatif, en se reportant aux figures annexées qui représentent :

- la figure 1, le diagramme par bloc d'un dispositif d'évaluation dans lequel est appliquée la présente invention,
- la figure 2, le diagramme par blocs du bloc de traitement BT du système de la figure 1,
- la figure 3, le schéma d'un mode de réalisation du module de sélection d'horloge MSH de la figure 2,
- la figure 4, le schéma d'un premier mode de réalisation du module de mesure de débit MMD de la figure 2,
- la figure 5, le schéma d'un deuxième mode de réalisation du module de mesure de débit MMD de la figure 2,
- la figure 6, le schéma d'un troisième mode de réalisation du module de mesure de débit MMD de la figure 2,
- la figure 7, le schéma d'un premier mode de réalisation du module de quantification du résultat MQR de la figure 2,
- la figure 8, le schéma d'un deuxième mode de réalisation du module de quantification du résultat MQR de la figure 2,
- la figure 9, le schéma d'un premier mode de réalisation du module de gestion de compte MGC de la figure 2,
- la figure 10, le schéma d'un deuxième mode de réalisation du module de gestion de compte MGC de la figure 2,

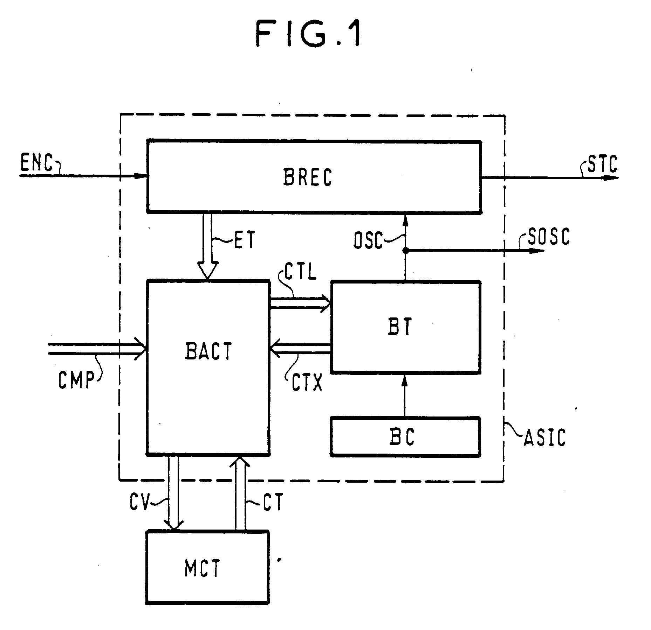

On se reportera d'abord à la figure 1 qui représente le diagramme général d'un dispositif d'évaluation dans lequel est appliquée la présente invention.

Le système d'évaluation de débits de la figure 1 est interposé entre une entrée de cellules ENC et une sortie de cellules STC. Il est intercalé sur une voie de transmission à multiplexage temporel asynchrone. Pour fixer les idées, le débit binaire de la voie de transmission, reçu sur l'entrée ENC, est par exemple de 600 Mbit/s. Ce débit traverse un bloc de réception/émission de cellules BREC que l'on peut voir comme un registre à décalage. Tant que les débits des circuits virtuels supportés par la liaison sont acceptables, toute cellule reçue sur l'entrée ENC est purement et simplement retransmise sur la sortie STC, avec un retard égal, par exemple, à la durée de transmission d'une cellule, soit 0,5 µs environ.

Une cellule, selon l'exemple mentionné dans le préambule de cette description, comprend quatre caractères d'en-tête ; deux d'entre eux fournissent un numéro de circuit virtuel à 16 bits. La cellule comprend aussi un corps de message comprenant 32 caractères.

Dès que l'en-tête d'une cellule est disponible dans le bloc BREC, cet en-tête ET est fourni à un bloc d'accès au contexte de traitement BACT. Dans ce bloc BACT, le numéro de circuit virtuel, CV, sert d'adresse pour la lecture, dans une mémoire de contexte de traitement MCT, du contexte de traitement CT du circuit virtuel auquel appartient la cellule reçue. Ce contexte de traitement CT est un ensemble d'informations numériques, les unes semi-permanentes, c'est-à-dire fixées pour la durée d'une communication empruntant le circuit virtuel, les autres modifiables, c'est-à-dire susceptibles d'évoluer à la réception de chaque cellule du circuit virtuel. Ce contexte de traitement contient ainsi une information définissant le "passé" du circuit virtuel.

Le bloc d'accès BACT fournit le contexte de traitement lu, appelé alors CTL au bloc de traitement BT, lequel dispose par ailleurs d'une information chronométrique fournie par un bloc de compteur BC. A partir de ces deux informations, le bloc de traitement BT élabore un contexte de traitement mis à jour CTX qui est retourné au bloc d'accès BACT pour être réinscrit à la même adresse CV, et il fournit un signal OSC, dans le cas où la cellule reçue n'est pas acceptable.

Le contexte mis à jour CTX contient des informations modifiables qui ont éventuellement changé, selon le programme de traitement du bloc BT, en fonction du fait même de la réception d'une cellule et, surtout, de l'heure d'arrivée de cette cellule, indiquée par le bloc de compteur BC.

Le signal OSC est transmis au bloc BREC où, dans une première forme de mise en oeuvre, il aura pour effet de remplacer la cellule reçue par une cellule vide. Dans une deuxième forme de mise en oeuvre, le signal OSC provoque seulement le marquage d'un indicateur prévu dans l'en-tête de la cellule ; il signifiera, dans les organes de commutation que traversera ultérieurement la cellule, que celle-ci peut ne pas être retransmise en cas de surcharge. D'autres cas d'utilisation du signal OSC peuvent être imaginés, matérialisés par une sortie SOSC pour le signal OSC.

Le temps mis par les blocs BACT et BT à accomplir les opérations que l'on vient de décrire est avantageusement égal à la durée de transmission d'une cellule, de sorte que ces blocs sont ensuite disponibles pour un nouveau cycle de fonctionnement dès la réception de la cellule suivante. On pourrait toutefois, comme il est bien connu dans la technique, aménager le fonctionnement des deux blocs de manière que les opérations de lecture-traitement-réinscription d'un contexte, pour une cellule reçue, se recouvrent avec les mêmes opérations relatives à la cellule suivante, afin que le bloc d'accès BACT et le bloc de traitement BT aient chacun la durée entière d'une cellule pour les opérations relatives à cette cellule.

Les informations de contexte CT sont initialement inscrites dans la mémoire MCT par un processeur de commande non représenté communiquant avec le bloc d'accès BACT par une liaison CMP. A chaque fois, le processeur fournit une adresse de circuit virtuel CV et une information de contexte CT. On peut envisager que le bloc BACT soit, par exemple, pourvu de moyens d'identification des cellules vides et qu'il procède à l'inscription d'un nouveau contexte dans le temps de réception de chaque cellule vide.

Le block BACT contiendra enfin des dispositifs de contrôle de fonctionnement et le processeur, par la liaison CMP, viendra y lire des comptes-rendus de fonctionnement.

Les blocs BREC, BACT, BT et BC ont été représentés à l'intérieur d'un cadre en traits interrompus car, comme on le verra par la suite, ils peuvent être réalisés collectivement sous la forme d'un circuit intégré à la demande (ASIC).

Dans ce qui suit, on ne donnera pas de description détaillée du bloc de réception/émission BREC qui peut être, pour l'essentiel un registre à décalage, ni du bloc de compteur BC qui sera un simple compteur binaire avançant d'un pas à chaque période d'une horloge incorporée et passant cycliquement par toutes ses positions. On discutera ultérieurement du nombre d'étages de ce compteur. On ne décrira pas non plus dans le détail le bloc d'accès BACT dont les fonctions ont été clairement définies et dont la réalisation, liée à la technologie appliquée pour la mémoire MCT, est à la portée de l'homme de métier. La description détaillée suivante concerne donc seulement le bloc de traitement BT.

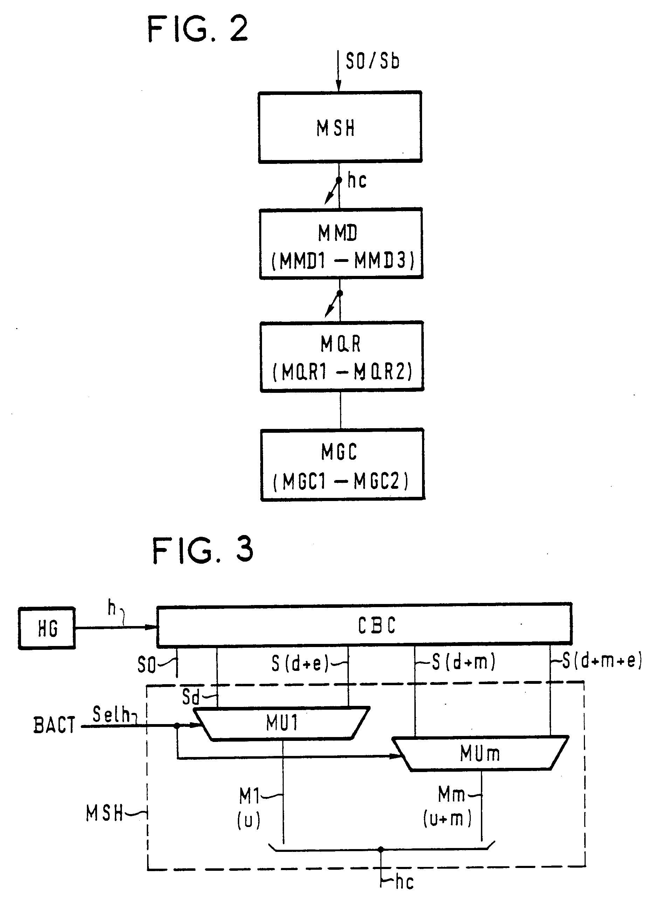

Ce bloc de traitement BT est sommairement illustré à la figure 2. Il comprend des modules de traitement de quatre types : au moins un module de sélection d'horloge MSH, au moins un module de mesure de débit MMD, au moins un module de quantification de résultat MQR, au moins un module de gestion de compte MGC.

Un module de sélection d'horloge MSH est représenté à la figure 3 où figure également le compteur CBC du bloc BC, constitué d'une succession d'étages binaires commandés par une horloge HG fournissant des impulsions h. Les sorties SO à S(d+m+e) du compteur CBC sont couplées au module de sélection d'horloge qui reçoit par ailleurs, du contexte CT fourni par le bloc d'accès BACT, une indication de sélection d'horloge selh qui est une indication binaire pouvant prendre e+1 valeurs successives. Cette indication est appliquée à m multiplexeurs MU1 à MUm qui prennent en conséquence tous la même orientation. Chacun de ces multiplexeurs est connecté à un groupe de e+1 sorties du compteur CBC, les m groupes étant eux-mêmes décalés à chaque fois d'une ou plusieurs sorties, de celui du multiplexeur MU1 à celui du multiplexeur MUm. Le multiplexeur MU1 est ainsi connecté aux sorties Sd à S(d+e) du compteur CBC, tandis que le multiplexeur MUm est connecté à ses sorties S(d+m) à Sb = S(d+m+e). Finalement, les sorties M1 à Mm des m multiplexeurs fournissent une heure courante hc sous le forme d'un nombre binaire dont les poids vont de u à u+m, le poids u dépendant de la valeur de l'indication selh. Chaque circuit virtuel peut ainsi se voir doté d'une horloge appropriée à son débit, définie par l'indication selh de son contexte de traitement.

Il convient de noter, toutefois, que plusieurs blocs de sélection d'horloge semblables à celui qui vient d'être décrit pourraient être prévus ensemble. On verra par la suite que les modules de mesure de débit utilisent tous une heure courante, qui est fournie par un module de sélection d'horloge. Un module de sélection d'horloge tel que celui de la figure 2 suffit lorsque qu'une même heure courante peut être utilisée par tous les modules de mesure. On comprendra aisément que, le cas échéant, il pourrait être nécessaire de fournir aux différents modules de mesure des heures courantes différentes ; elles seront fournies par autant de modules de sélection d'horloge.

Le bloc de traitement BT comprend ensuite un ou plusieurs des modules de mesure de débit MMD1 à MMD3.

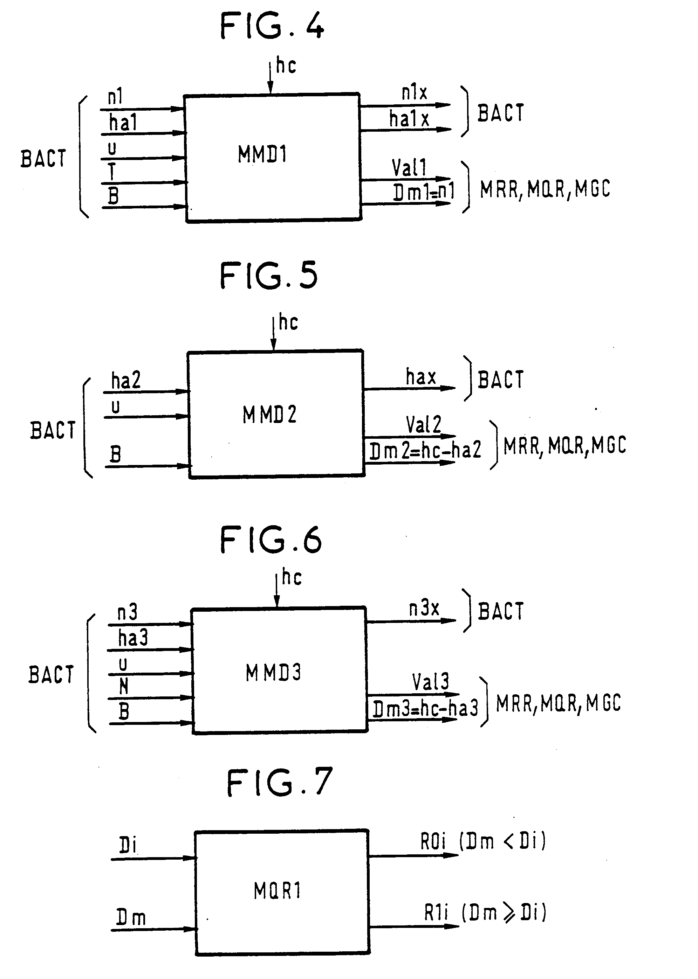

On décrira d'abord le module MMD1, en se référant à la figure 4. Ce module reçoit du contexte CT, fourni par la bloc BACT, les indications suivantes :
- la durée T d'un intervalle de mesure également appelé T, exprimée en périodes u,
- la valeur de la période u,
- une heure de début ha1 de l'intervalle de mesure T, établie antérieurement à partir de l'heure courante hc,
- le nombre n1 de cellules déjà reçues dans l'intervalle de temps T en cours,
- le nombre B de bits d'une cellule.

Il reçoit aussi l'heure courante hc fournie par le module MSH.

Le module MMD1 effectue la différence hc - ha1. Si cette différence est inférieure à T, il fournit seulement au bloc BACT une valeur n1x = n1 + 1, destinée à prendre la place de la valeur n1, dans le contexte CT. Si, par contre, cette différence est égale ou supérieure à T, il fournit un signal de validation Val1, accompagnant une valeur Dm1 = n1, à l'intention du module suivant MQR, MRR ou MGC. Il fournit alors au bloc BACT une valeur n1x = 1 et une valeur ha1x = hc, qui sont enregistrées dans le contexte CT, à la place des valeurs n1 et ha1. Ainsi, l'heure de début enregistrée dans le contexte de traitement CT est l'heure de réception d'une cellule antérieure, pour laquelle la valeur n1 était égale à 1.

Le débit Dm1 ainsi établi à l'expiration de chaque intervalle de mesure, de durée au moins égale à T, devrait formellement avoir pour valeur $n1*B/T*u$, soit le nombre de bits reçus par seconde, si la période u est exprimée en secondes. Toutefois, comme on l'a indiqué, Dm1 = n1, et le résultat de mesure ne contient pas le facteur $B/T*u$. Il n'est donc pas nécessaire que le module MMD1 reçoive du contexte de traitement CT les valeurs u et B qui ne servent qu'à l'établissement du résultat. On verra par la suite que ces facteurs absents du résultat de mesure sont en fait pris en compte dans le bloc qui utilise ce résultat. Par ailleurs, on peut noter que la valeur B peut être une constante du système de transmission et que la valeur T peut être une constante du système d'évaluation. Dans ce cas, elles ne sont pas fournies par le contexte CT, mais incluses en tant que valeurs constantes dans les modules du bloc de traitement BT.

Il reste enfin a mentionner que la mesure de l'intervalle de mesure T, bien qu'elle ne soit pas effectuée rigoureusement, peut être suffisamment précise. En effet, cet intervalle commence, comme indiqué, par l'heure d'arrivée d'une cellule et le nombre de cellules déjà reçues, fixé à 1. Ensuite, les cellules sont comptées, jusqu'à ce que l'on reçoive une cellule pour laquelle la différence hc - ha1 indique que l'intervalle de mesure est dépassé. Cette dernière cellule n'entre pas dans l'indication de débit, puisque l'intervalle de mesure est terminé. Elle entrera par contre dans le compte du prochain intervalle de mesure. Donc, toutes les cellules sont comptées. L'imprécision vient de ce que les intervalles de mesure ne sont pas jointifs. Elle est au plus d'une unité sur le nombre de cellules comptées par intervalle de mesure. Avec un nombre de cellules suffisamment élevé, au débit moyen attendu, cette imprécision peut être négligeable.

Ainsi, la mesure de débit effectuée par le module MMD1 est donc fournie par un nombre de cellules déjà reçues dans l'intervalle de mesure, avant que n'arrive la cellule considérée.

Le module MMD2 de la figure 5 reçoit, outre l'heure courante hc provenant du bloc de sélection d'horloge MSH, la valeur B définie précédemment et une valeur ha2 qui est cette fois l'heure courante relevée lors de la réception de la cellule précédente, ces deux dernières valeurs provenant du contexte de traitement CT fourni par le bloc BACT.

Le module MMD2 effectue ainsi, à chaque cellule arrivée, la différence hc-ha2. Il fournit un signal de validation Val2, accompagnant une valeur Dm2 = hc - ha2, à l'intention du module suivant MQR, MRR ou MGC. Il fournit aussi au bloc BACT une valeur ha2x = hc, qui est enregistrée dans le contexte CT, à la place de la valeur ha2.

L'expression du débit ainsi établi à la réception de chaque cellule devrait rigoureusement avoir pour valeur B/(hc - ha2)*u, mais les facteurs B et u ne sont pas inclus dans le résultat de mesure Dm3 ; ils sont pris en compte dans le module suivant, comme on le verra plus loin. Et la valeur B, comme indiqué précédemment peut être une constante du système de transmission.

Dans le cas de ce module MMD2, la mesure de débit est ainsi directement fournie par la durée de l'intervalle de temps qui s'est écoulé entre la cellule qui vient d'arriver et la cellule précédente du circuit virtuel considéré.

Le module MMD3 de la figure 6 reçoit, outre l'heure courante hc provenant du bloc de sélection d'horloge MSH, la valeur B définie précédemment, une valeur ha3 qui est cette fois l'heure courante enregistrée lors de la réception d'une première cellule d'un groupe de N cellules, un compte n3 qui est le nombre de cellules déjà reçues de ce groupe de N cellules, ainsi qu'une valeur N que doit atteindre le compte de cellules d'un groupe, ces différentes valeurs provenant du contexte de traitement CT.

Le module MMD3 effectue d'abord l'incrémentation du compte n3, n3x = n3 + 1, puis compare le compte n3x à la valeur N. Si n3x < N, le module MMD3 fournit le compte n3x au bloc BACT, pour mise à jour du contexte de traitement CT (la valeur ha3 restant inchangée). Si n3x = N, le bloc MMD3 effectue la différence hc - ha3. Il fournit un signal de validation Val3, accompagnant une valeur Dm3 = hc - Ha3, à l'intention du module suivant, de type MRR, MQR ou MGC. Il fournit aussi au bloc BACT une valeur ha3x = hc et une valeur n3x = 0 qui sont enregistrées dans le contexte CT, à la place des valeurs ha3 et n3.

L'expression rigoureuse du débit ainsi établi à la réception de chaque cellule a pour valeur :

$$B * N / (hc - ha3) * u,$$

mais les facteurs B, N et u ne sont pas inclus dans le résultat de mesure Dm3 ; ils sont pris en compte dans le module suivant. Et la valeur B, comme indiqué précédemment peut être une constante du système de transmission. La valeur N peut quant à elle être une constante du système d'évaluation.

La mesure de débit fournie par le module MMD3 est cette fois la durée de l'intervalle de temps demandé pour la réception de N cellules. On peut aussi le voir comme l'intervalle de temps moyen entre cellules consécutives, évalué sur N cellules, multiplié par une constante, qui est aussi N.

Le bloc traitement BT comprend ensuite, selon l'invention, au moins un module de quantification du résultat MQR. Il peut prendre la forme du module MQR1 illustré à la figure 7. Ce module MQR1 reçoit une indication de mesure de débit mesuré Dm, c'est-à-dire l'un des résultats de mesure Dm1, Dm2, Dm3, en provenance de l'un des modules précédents MMD1 à MMD3, et reçoit une indication de seuil de débit Di provenant du contexte de traitement CT. Il compare l'une à l'autre et produit un signal de résultat Ri0 si la valeur de débit mesurée n'atteint pas le seuil, ou un signal de résultat Ri1 si la valeur de débit mesurée est égale ou supérieure au seuil. Ces signaux sont destinés à un module suivant MRR, ou directement à un des modules de gestion de compte MGC.

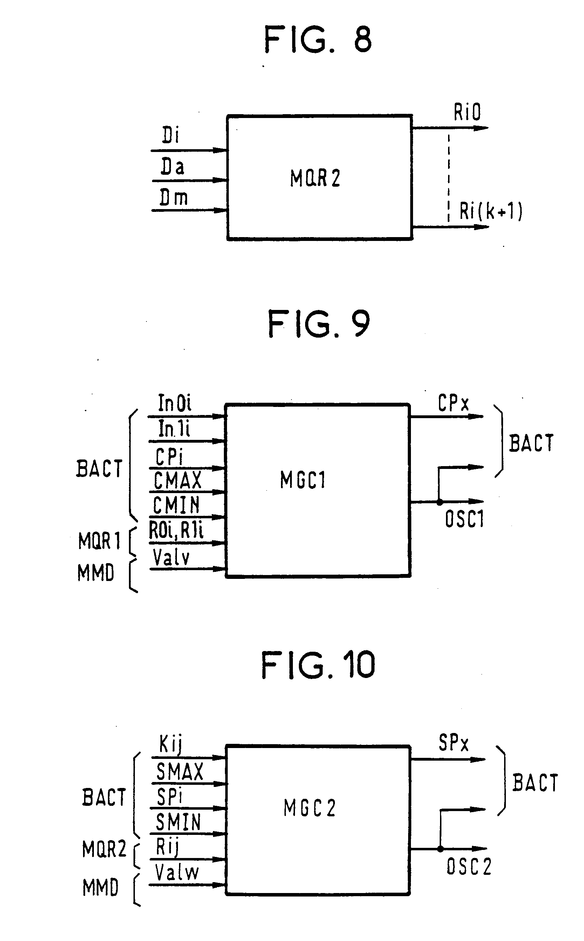

En variante, le module de quantification de résultat MQR peut prendre la forme du module MQR2 illustré à la figure 8. Outre les valeurs Di et Dm, le module MQR2 reçoit aussi du contexte CT une valeur Da. Dans le module MQR, les valeurs Di et Da sont combinées pour fournir une échelle d'indications de seuil Di, Di + Da, Di + 2*Da...,Di + k*Da et la valeur Dm est comparée à cet ensemble de seuils de sorte que le module produit un signal de résultat Ri0 seulement si le seuil le plus bas n'est pas atteint, le signal Ri1, si le seuil Di est franchi, amis non pas les seuils suivants, et ainsi de suite, le signal de résultat Ri(k+1) étant fourni, seulement lorsque le seuil le plus élevé Di + K*Da est franchi. Ces signaux sont destinés à des modules de réduction du nombre de résultats MRR, ou directement des modules de gestion de compte MGC.

Dans ce module MQR2, en variante, il est encore possible que les différentes valeurs de l'échelle d'indications de seuil soient directement fournies par le contexte.

On décrira ensuite un exemple de réalisation d'un module de gestion de compte MGC1, illustré à la figure 9.

Ce module suit un module de quantification de résultat de type MQR1. Il reçoit de ce dernier, à la réception d'une cellule, une indication de résultat Ri0, Ri1, en même temps qu'un signal de validation Valv qui n'est autre que le signal de validation du module ayant fournit le résultat de mesure qui est à l'origine de l'indication de résultat. En même temps, le module MGC1 reçoit du contexte une indication de compteur de dépassement CPi, une indication de seuil minimal CMIN, une indication de seuil maximal CMAX, ainsi qu'un incrément négatif In0i et un incrément positif In1i.

En échange, le module MGC1, modifie la valeur du compteur de dépassement CPi, soit en lui retranchant l'incrément négatif (In0i), si l'indication de résultat Ri0 est présente, soit en lui ajoutant l'incrément positif In1i, si l'indication de résultat Ri1 est présente. Cela fournit une nouvelle valeur de compteur de dépassement CPx qui est comparée aux seuils CMIN et CMAX. Si CPx < CMIN, alors CPx est limité à la valeur CMIN. Aucune autre action n'est accompli. En quelque sorte le circuit virtuel a reçu un crédit, limité par la valeur CMIN, en vue de dépassements de débit ultérieurs. Si CPx est compris entre les deux seuils, la valeur CPx est enregistrée, telle qu'elle. La cellule reçue est acceptée. Si CPx > CMAX, cela signifie que le débit mesuré est supérieur au débit permis, tout crédit consommé. CPx est limité à CMAX et l'ordre OSC1 est émis, pour provoquer une action corrective.

Ainsi, à chaque mesure de débit, le résultat de mesure est comparé à un seuil dans le module MQR1. Un dépassement du seuil est compté au débit du compteur de dépassement CPi, une mesure inférieure à ce seuil donnant lieu à un crédit. Le dépassement persistant du seuil aboutit à une action corrective.

On observera que les incréments positif et négatif peuvent être des constantes du dispositif, égales, par exemple, toutes deux à l'unité. Dans ce cas elles ne sont pas fournies par le contexte, mais câblées dans le module MGC1. Il peut en être de même pour les seuils CMIN et CMAX.

On va maintenant passer à la description d'un second exemple de réalisation du module de gestion de compte conforme à l'invention, désigné par la référence MGC2 et illustré à la figure 10. Ce module doit être précédé d'un module de quantification de résultat tel que le module MQR2 illustré à la figure 8. On rappelle qu'à chaque cellule, le module MQR2 fournit pour différentes valeurs de seuil, une indication Rij (i = échelle de valeurs de seuil ; j = 0..., (k + 1)) caractérisant le franchissement du seuil, c'est-à-dire le fait que la valeur de mesure se trouve dans l'intervalle entre un seuil j et le seuil suivant j+1. L'information Rij correspondant à ces seuils est fournie au module de gestion de compte MGC2, accompagnée d'un signal de validation Valw, qui n'est autre que le signal de validation fourni par le module de mesure d'où provient le résultat de mesure quantifié, en même temps qu'une valeur de compte SPi établie à la réception d'une cellule précédente comme on va le voir, une valeur de seuil maximal de comptage SMAX, une valeur de seuil minimal de comptage SMIN, ainsi qu'une échelle de comptage Kij.

L'échelle de comptage Kij est un ensemble de valeurs de comptage et chaque valeur Rij correspond à l'une de ces valeurs.

Selon l'information Rij, une des valeurs de l'échelle de comptage Kij est activée et cette valeur (qui peut être positive ou négative) est additionnée à la valeur de compte SPi. Ensuite, la valeur modifiée Spx est comparée au seuil maximal SMAX. Si SPx > SMAX, l'ordre OSC2, semblable à l'ordre OSC1 (voir plus haut) est engendré. Parallèlement, la valeur modifiée SPx est comparée au seuil minimal SMIN. Si SPx < SMIN, la valeur SPx est limitée à SPx = SMIN. Aucune autre action n'est effectuée.

Ainsi, la valeur de compte SPi évolue en réponse à chaque résultat de mesure et selon la position de ce résultat par rapport à une échelle de valeurs de seuil, comme spécifié par l'échelle de comptage. On peut ainsi, par exemple, accorder des crédits dégressifs aux débits faibles et des pénalités progressives aux débits élevés.

La même indication Rij fournie par un module de quantification du résultat peut par ailleurs être communiquée à plusieurs modules de gestion de compte MGC2, avant des échelles de comptage différentes. Cela permet d'effectuer en parallèle plusieurs évaluations du débit du circuit virtuel selon des critères différents.

L'échelle de comptage Kij peut être une constante du système d'évaluation et, dans ce cas, elle n'est pas fournie par le contexte, mais inscrite dans le module MGC2. Selon une variante, plusieurs échelles de comptage distinctes sont inscrites dans le module MGC2 ; l'information Kij désigne l'une de ces échelles et sert, dans le module MGC2, à sélectionner et mettre en oeuvre cette échelle.

L'apparition d'un ordre OSC1 ou OSC2 aura en outre avantageusement pour effet d'inhiber partiellement la mise à jour du contexte de traitement CT. Pour le module du type MMD2, elle interdira le remplacement de l'heure de début ha2 par l'heure courant hax. La conséquence sera que, pour ce module, la cellule ayant donné lieu à action corrective sera considérée comme n'ayant pas existé. On peut aussi prévoir que le ou les compteurs du ou des modules de gestion de compte ne soient pas non plus mis à jour. Ainsi, toute cellule excédentaire est éliminée, ce que ramène le circuit virtuel à un débit acceptable. Plus généralement, on peut n'opérer aucune mise à jour du contexte de traitement CT. La cellule ayant donné lieu à action corrective est alors considérée comme n'ayant pas été reçue par le dispositif d'évaluation.

Le mode de réalisation pratique du dispositif d'évaluation de débits de l'invention ne pose pas de problème technique, dans la mesure où les différents éléments, tels qu'on les a décrits, effectuent des opérations logiques et arithmétiques simples. Comme indiqué à la figure 1, l'ensemble des blocs BREC, BACT, BT et BC, peut être réalisé sous la forme d'un unique composant ASIC à circuits intégrés. La mémoire MCT contenant les contextes, dans l'état actuel de la technologie, sera un composant séparé. La conception modulaire du bloc de traitement BT permet de l'adapter aisément aux différentes applications envisagées. Le cas d'application considéré n'est qu'un exemple et d'autres configurations sont possibles. Ces configurations distinctes pourraient être toutes obtenues à partir du même circuit intégré, en le dotant d'un nombre suffisant de modules des divers types et de moyens de configuration (registre et commutateurs de configuration), accessibles par exemple, par la liaison CMP, permettant de réaliser toute une variété de configurations de modules différentes.

**Revendications**

1. Procédé d'évaluation du débit de circuits virtuels acheminant des cellules et empruntant une voie de transmission à multiplexage temporel asynchrone comprenant l'emploi d'une mémoire dans laquelle à chaque circuit virtuel est affecté un emplacement contenant un ensemble de données - que l'on appellera contexte - définissant les conditions de l'évaluation du débit de ce circuit virtuel, la lecture, à la réception d'une cellule, de contexte du circuit virtuel auquel appartient cette cellule, ce procédé comprenant encore l'emploi d'une horloge aménagée pour fournir une heure courante associé à ce circuit virtuel, ainsi que de moyens de mesure de débit intervenant à l'arrivée de chaque cellule dans la mesure du débit du circuit virtuel auquel appartient cette cellule, ces moyens de mesure fournissant, à l'arrivée d'une cellule, à partir de ladite heure courante et d'au moins une heure de début enregistrée dans ledit contexte à l'arrivée d'une cellule précédente, au moins une mesure de débit (Dm1, Dm2, Dm3) du circuit virtuel de cette dernière cellule, caractérisé en ce que le contexte (CT) comprend au moins un seuil de débit (Di) et qu'il est prévu de comparer une telle mesure de débit (Dm1, Dm2, Dm3) avec ce seuil et d'actionner un compteur de dépassements (CPi), dans un premier sens, si ce seuil est atteint ou dépassé, ou dans un autre sens, si ce seuil n'est pas atteint, ainsi que de déterminer qu'un tel actionnement a amené le compteur de dépassements dans une position extrême dudit premier sens, et alors de fournir un signal (OSC1) manifestant la nécessité d'une action corrective.

2. Procédé d'évaluation du débit de circuits virtuels empruntant une voie de transmission à multiplexage temporel asynchrone conforme à la revendication 1, caractérisé en ce qu'il est prévu plusieurs seuils de débit (Di, Di+Da,...) et une valeur de compte (SPi) et qu'il est prévu de comparer une desdites mesures de débit (Dm1, Dm2, Dm3) avec ces seuils, pour déterminer dans quel intervalle entre seuils (Ri0, Ri1...) elle se trouve, et de modifier ladite valeur de compte (SPi) en fonction dudit intervalle déterminé, ainsi que de déterminer l'arrivée en position extrême d'un premier sens de cette valeur de compte pour fournir alors ledit signal (OSC2) manifestant la nécessité d'une action corrective.

3. Dispositif d'évaluation du débit de circuits virtuels acheminant des cellules et empruntant une voie de transmission à multiplexage temporel asynchrone, ce dispositif étant intercalé sur la voie de transmission et comprenant une mémoire dans laquelle à chaque circuit virtuel est affecté un emplacement contenant un ensemble de données que l'on appellera contexte - définissant les conditions de l'évaluation du débit de ce circuit virtuel, des moyens permettant, à l'arrivée d'une cellule, la lecture du contexte du circuit virtuel auquel appartient cette cellule, en vue de l'évaluation du débit de ce circuit virtuel, une horloge aménagée pour fournir une heure courante associée à ce circuit virtuel, ainsi que des moyens de mesure de débit intervenant à l'arrivée de chaque cellule aux fins de la mesure du débit du circuit virtuel auquel appartient cette cellule, ces moyens fournissant, à l'arrivée d'une cellule, à partir de ladite heure courante et d'au moins une heure de début enregistrée dans ledit contexte à l'arrivée d'une cellule précédante, au moins une mesure de débit (Dm1, Dm2, Dm3) du circuit virtuel de cette dernière cellule, caractérisé en ce que le contexte (CT) comprend au moins un seuil de débit (Di) et en ce que des moyens (MQR1) sont prévus pour comparer une telle mesure de débit (Dm1, Dm2, Dm3) avec ce seuil et des moyens (MGC2) pour actionner un compteur de dépassements (CPi), dans un premier sens, si ce seuil est atteint ou dépassé, ou dans l'autre sens, si ce seuil n'est pas atteint, des moyens (MGC2) étant en outre prévus afin de déterminer qu'un tel actionnement a amené le compteur de dépassements dans une position extrême dudit premier sens, et alors de fournir un signal (OSC1) manifestant la nécessité d'une action corrective.

4. Dispositif d'évaluation du débit de circuits virtuels empruntant une voie de transmission à multiplexage temporel asynchrone conforme à la revendication 3, caractérisé en ce qu'il est prévu plusieurs seuils de débit (Di, Di+Da,...) et une valeur de compte (SPi) et qu'il est prévu de comparer une desdites mesures de débit (Dm1, Dm2, Dm3) avec ces seuils, pour déterminer dans quel intervalle entre seuils (Ri0, Ri1...) elle se trouve, et de modifier ladite valeur de compte (SPi) en fonction dudit intervalle déterminé, ainsi que de déterminer l'arrivée en position extrême d'un premier sens de cette valeur de compte pour fournir alors ledit signal (OSC2) manifestant la nécessité d'une action corrective.

**Patentansprüche**

1. Verfahren zur Bestimmung des Durchsatzes virtueller Kreise, die Datenzellen übertragen und über einen Übertragungskanal mit asynchroner Zeitmultiplexierung verlaufen, wobei ein Speicher verwendet wird, in dem jedem virtuellen Kreis ein Speicherraum mit einer Gruppe von Daten zugeteilt ist, die Kontext genannt wird und die Bedingungen der Ermittlung des Durchsatzes dieses virtuellen Kreises definiert, und wobei beim Empfang jeder Zelle der Kontext des virtuellen Kreises gelesen wird, zu dem diese Zelle gehört, wobei weiter ein Taktgeber verwendet wird, um eine diesem virtuellen Kreis zugeordnete laufende Uhrzeit zu liefern, sowie Mittel zur Messung des Durchsatzes vorgesehen sind, die beim Eintreffen jeder Zelle auf die Durchsatzmessung des virtuellen Kreises einwirken, dem diese Zelle angehört, wobei diese Meßmittel beim Eintreffen einer Zelle ausgehend von der laufenden Uhrzeit und mindestens einer im Kontext beim Eintreffen der vorhergehenden Zelle registrierte Anfangszeit, mindestens einen Durchsatzmeßwert (Dm1, Dm2, Dm3) des virtuellen Kreises dieser letzteren Zelle liefern, dadurch gekennzeichnet, daß der Kontext (CT) mindestens eine Durchsatzschwelle (Di) enthält und daß ein solcher Durchsatzmeßwert (Dm1, Dm2, Dm3) mit dieser Schwelle verglichen wird und ein Überschreitungszähler (CPi) in einer ersten Richtung weitergeschaltet wird, wenn die Schwelle erreicht oder überschritten wird, oder in der anderen Richtung weitergeschaltet wird, wenn diese Schwelle nicht erreicht wird, und daß weiter bestimmt wird, ob eine solche Weiterschaltung den Überschreitungszähler in eine Endstellung in einer ersten Richtung gebracht hat, worauf ein Signal (OSC1) geliefert wird, das die Notwendigkeit einer Korrekturaktion angibt.

2. Verfahren nach Anspruch 1 zur Bestimmung des Durchsatzes von über einen Übertragungskanal mit asynchroner Zeitmultiplexierung verlaufenden virtuellen Kreisen, dadurch gekennzeichnet, daß mehrere Durchsatzschwellen (Di, Di+Da, ...) und ein Kontowert (SPI) vorgesehen sind und daß einer dieser Durchsatzmeßwerte (Dm1, Dm2, Dm3) mit diesen Schwellen verglichen wird, um zu bestimmen, in welchem Intervall zwischen Schwellen (Ri0, Ri1, ...) der Meßwert sich befindet, und daß der Kontowert (SPi) abhängig von dem bestimmten Intervall verändert wird und gemeldet wird, wenn der Kontowert in einer ersten Richtung eine Endposition erreicht hat, um dann das Signal (OSC2) zu liefern, das die Notwendigkeit einer Korrekturaktion angibt.

3. Vorrichtung zur Bestimmung des Durchsatzes von virtuellen Kreisen, die Datenzellen übertragen und über einen Übertragungskanal mit asynchroner Zeitmultiplexierung verlaufenden, wobei diese Vorrichtung in den Übertragungskanal eingefügt ist und einen Speicher enthält, in dem jedem virtuellen Kreis ein Speicherraum mit einer Gruppe von Daten zugeordnet ist, die Kontext genannt wird und die Ermittlungsbedingungen für den Durchsatz dieses virtuellen Kreises definiert, wobei Mittel vorgesehen sind, um bei Empfang einer Zelle den Kontext des virtuellen Kreises zu lesen, zu dem diese Zelle gehört, um den Durchsatz dieses virtuellen Kreises zu ermitteln, weiter ein Taktgeber, der eine diesem virtuellen Kreis zugewiesene laufende Uhrzeit liefert, sowie Mittel zur Durchsatzmessung, die beim Eintreffen jeder Zelle wirksam werden und die Durchsatzmessung des virtuellen Kreises, dem diese Zelle angehört, veranlassen, wobei diese Mittel beim Eintreffen einer Zelle ausgehend von der laufenden Uhrzeit und mindestens einer Anfangszeit, die beim Eintreffen einer vorhergehenden Zelle im Kontext registriert worden war, mindestens einen Durchsatzmeßwert (Dm1, Dm2, Dm3) des virtuellen Kreises dieser letztgenannten Zelle liefern, dadurch gekennzeichnet, daß der Kontext (CT) mindestens eine Durchsatzschwelle (Di) enthält und daß Mittel MQR1) vorgesehen sind, um einen solchen Durchsatzmeßwert (Dm1, Dm2, Dm3) mit dieser Schwelle zu vergleichen, sowie Mittel (MGC2), um einen Überschreitungszähler (CPi) in einer ersten Richtung fortzuschalten, wenn diese Schwelle erreicht oder überschritten wird, oder in der anderen Richtung, wenn die Schwelle nicht erreicht wird, wobei weiter Mittel (MGC2) vorgesehen sind, um festzustellen, ob eine solche Weiterschaltung den Überschreitungszähler in eine Endstellung in einer ersten Richtung gebracht hat, worauf dann ein Signal (OSC1) geliefert wird, das die Notwendigkeit einer Korrekturaktion angibt.

4. Vorrichtung nach Anspruch 3 zur Ermittlung des Durchsatzes von virtuellen Kreisen, die über einen Übertragungskanal mit asynchroner Zeitmultiplexierung verlaufen, dadurch gekennzeichnet, daß mehrere Durchsatzschwellen (Di, Di+Da, ...) und ein Kontowert (SPi) vorgesehen sind und daß einer dieser Durchsatzmeßwerte (Dm1, Dm2, Dm3) mit diesen Schwellen verglichen wird, um zu bestimmen, in welchem Intervall zwischen Schwellen (Ri0, Ri1, ...) der Meßwert sich befindet, daß der Kontowert (SPi) abhängig von dem bestimmten Intervall verändert wird und daß das Signal (OSC2) geliefert wird, das die Notwendigkeit einer Korrekturaktion angibt, wenn der Kontowert in einer ersten Richtung in einer Endposition angekommen ist.

**Claims**

1. Method for evaluating the throughput of virtual circuits carrying cells and employing an asynchronous time-division multiplexed transmission channel comprising the use of a memory in which, for each virtual circuit, a memory location is assigned containing a set of data, referred to hereinafter as the context, defining the conditions of evaluation of the throughput of this virtual circuit and providing for, upon reception of each cell, reading of the context of the virtual circuit to which said cell belongs, the method further comprising the use of a clock signal adapted to supply a current time associated with this virtual circuit, and throughput measuring means contributing upon reception of each cell to the measurement of the throughput of the virtual circuit to which said cell belongs, said measuring means, upon reception of a cell, supplying from said current time and at least one starting time recorded in said context upon reception of a previous cell, at least one measurement (Dm1, Dm2, Dm3) of the throughput of the virtual circuit of the latter cell, characterised in that the context (CT) includes at least one throughput threshold (Di) and provision is made for comparing one such throughput measurement (Dm1, Dm2, Dm3) with said threshold and starting a counter (CPi) for counting exceedings of the threshold in a first direction if said threshold is reached or exceeded or in another direction if said threshold is not reached and for determining that such starting action has brought the counter to an extreme position of said first direction and for then supplying a signal (OSC1) indicating the need for corrective action.

2. Method according to claim 1 for evaluating the throughput of virtual circuits employing an asynchronous time-division multiplexed transmission channel, characterised in that several throughput thresholds (Di, Di+Da, ...) and a count value (SPi) are provided and that provision is made to compare one of said throughput measurements (Dm1, Dm2, Dm3, RRm) with these thresholds in order to determine within which interval between thresholds (Ri0, Ri1, ...) said measurement lies, and for modifying said count value as a function of said determined interval, and further for determining the arrival at an extreme position in a first direction of this count value in order then to supply said signal (OSC2) indicating the need for corrective action.

3. Device for evaluating the throughput of virtual circuits carrying cells and employing an asynchronous time-division multiplexed transmission channel, said device being inserted into the transmission channel and comprising a memory in which, for each virtual circuit, a memory location is assigned, containing a set of data, referred to hereinafter as the context, defining the conditions of evaluation of the throughput of this virtual circuit, means for, upon reception of a cell, reading the context of the virtual circuit to which this cell belongs, in order to evaluate the throughput of this virtual circuit, together with a clock signal source adapted to supply a current time associated with this virtual circuit, and throughput measuring means contributing upon reception of each cell to the measurement of the throughput of the virtual circuit to which said cell belongs, said measuring means, upon reception of a cell, supplying from said current time and at least one starting time recorded in said context upon reception of a previous cell, at least one measurement (Dm1, Dm2, Dm3) of the throughput of the virtual circuit of the latter cell, characterised in that the context (CT) includes at least one throughput threshold (Di) and means (MQR1) are provided for comparing one such throughput measurement (Dm1, Dm2, Dm3) with said threshold and means (MGC2) are provided for starting a counter (CPi) for counting exceedings of the threshold in a first direction if said threshold is reached or exceeded or in another direction if said threshold is not reached and means (MGC2) are provided for determining that such starting action has brought the counter to an extreme position of said first direction and for then supplying a signal (OSC1) indicating the need for corrective action.

4.  Device according to claim 3 for evaluating the throughput of virtual circuits employing an asynchronous time-division multiplexed transmission channel, characterised in that a count value (SPi) and several throughput thresholds (Di, Di + Da, ...) are provided, in that provision is made for comparing one of said throughput measurements (Dm1, Dm2, Dm3) with these thresholds in order to determine in which interval between thresholds (Ri0, Ri1, etc) said measurement lies and in that provision is made for modifying said count value (SPi) by an amount which is a function of said determined interval, as well as for determining arrival at the extreme position in a first direction of this count value and then issuing said signal (OSC2) indicating the need for corrective action.

# FIG.1

# FIG. 2

SO/Sb

MSH

hc

MMD
(MMD1 — MMD3)

MQR
(MQR1 — MQR2)

MGC
(MGC1 — MGC2)

# FIG. 3

HG — h → CBC

SO   S(d+e)   S(d+m)   S(d+m+e)

Sd

BACT — Selh → MU1

MUm

M1
(u)

Mm
(u+m)

MSH

hc

# FIG. 4

# FIG. 5

# FIG. 6

# FIG. 7

# FIG. 8

# FIG. 9

# FIG. 10